# EUROPEAN PATENT SPECIFICATION

(11) **EP 0 332 095 B1**
(45) Date of publication and mention of the grant of the patent: **04.01.1995**
(21) Application number: 89103837.4
(22) Date of filing: 04.03.1989
(51) Int. Cl.: H02M 3/335, H04N 5/63

(54) **A switch-mode power supply**
Schaltnetzteil
Alimentation de puissance à découpage

(30) Priority: 10.03.1988 GB 8805759; 14.11.1988 US 270877
(43) Date of publication of application: 13.09.1989
(73) Proprietor: RCA Thomson Licensing Corporation, Princeton, NJ 08540 (US)
(72) Inventor: Leonardi, Giovanni Michele, CH-8048 Zürich (CH)
(74) Representative: Einsel, Robert, Dipl.-Ing.

(56) References cited:
- WO-A-87/04885
- US-A- 4 135 233
- US-A- 4 683 528
- US-A- 4 692 852

## Description

The invention relates to switched-mode power supplies.

Some television receivers have signal terminals for receiving, for example, external video input signals such as R, G and B input signals, that are to be developed relative to the common conductor of the receiver. Such signal terminals and the receiver common conductor may be coupled to corresponding signal terminals and common conductors of external devices, such as, for example, a VCR or a teletext decoder.

To simplify the coupling of signals between the external devices and the television receiver, the common conductors of the receiver and of the external devices are connected together so that all are at the same potential. The signal lines of each external device are coupled to the corresponding signal terminals of the receiver. In such an arrangement, the common conductor of each device, such as of the television receiver, may be held "floating", or conductively isolated, relative to the corresponding AC mains supply source that energizes the device. When the common conductor is held floating, a user touching a terminal that is at the potential of the common conductor will not suffer an electrical shock.

Therefore, it may be desirable to isolate the common conductor, or ground, of, for example, the television receiver from the potentials of the terminals of the AC mains supply source that provide power to the television receiver. Such isolation is typically achieved by a transformer. The isolated common conductor is sometimes referred to as "cold" ground conductor.

In a typical switched mode power supply (SMPS) of a television receiver, for example, the AC mains supply voltage is coupled directly to a bridge rectifier for producing an unregulated direct current (DC) input supply voltage that is, for example, referenced to a common conductor, referred to as "hot" ground, and that is conductively isolated from the cold ground conductor. A pulse width modulator controls the duty cycle of a chopper transistor switch that applies the unregulated supply voltage across a primary winding of an isolating flyback transformer. A flyback voltage at a frequency that is determined by the modulator is developed at a secondary winding of the transformer and is rectified to produce a DC output supply voltage such as a voltage B+ that energizes a horizontal deflection circuit of the television receiver. The primary winding of the flyback transformer is, for example, conductively coupled to the hot ground conductor. The secondary winding of the flyback transformer and voltage B+ may be conductively isolated from the hot ground conductor by the hot-cold barrier formed by the transformer.

In some prior art circuits (US-17-4 692 852), voltage B+ is sensed by sensing a voltage developed at a separate winding of the flyback transformer. Disadvantageously, such sensed voltage may not track variation of voltage B+ sufficiently. In order to provide better regulating of voltage B+, it may be desirable to sense voltage B+ directly at a terminal where it is produced.

In a SMPS embodying an aspect of the invention, a feedback timing control signal is produced in accordance with the level of voltage B+, that are both referenced to the cold ground conductor. The timing control signal is applied to the chopper transistor switch that is conductively coupled to the hot ground conductor to effectuate pulse width modulation of the conduction duty cycle of the chopper transistor switch.

It is an object of the invention to modify the circuit of a switch mode power supply in such a way that a timing control signal derived at the secondary side of the transformer can be transferred to the switching transistor on the primary side without using an additional isolating transformer for transferring said timing control signal. According to another object of the invention a simple and effective arrangement is provided for switching the switch mode power supply between normal operation and stand-by operation.

The object of the invention is solved by the invention as described in claim 1. Advantageous embodiments of the invention are described in the subclaims. Said further object of the invention concerning switching between normal and stand-by operation is solved by the features of claim 8.

A switch mode power supply embodying another aspect of the invention includes a source of an input supply voltage and a transformer having first and second windings. A controllable switch has a main current conducting terminal that is coupled to the first winding and to the source of the input supply voltage. The controllable switch is switched by a periodic first control signal for generating a first switching current in the first winding that stores magnetic energy in the transformer. The first switching current is used for producing an output supply voltage that is coupled to a load. A current sampling first impedance is coupled in a current path that includes the first winding for conducting at least a portion of the first switching current in the first impedance. A current sampling signal is developed in the first impedance that is indicative of a level of the first switching current when the switching transistor is conductive. The first control signal switches the controllable switch into nonconduction when the first switching current exceeds a predetermined level in accordance with the current sampling signal. A low impedance is applied to the second winding after a first conduction interval of the controllable switch has elapsed, to cause the first switching current to exceed the predetermined level. The first conduction interval is varied in accordance with the output supply voltage such that a duty cycle of the controllable switch varies in a negative feedback manner for regulating the output supply voltage.

The first switching current may be coupled via a third winding of the transformer to produce the output supply voltage from the current in the third winding. The first winding may be electrically nonisolated from the input supply voltage with respect to electrical shock hazard; whereas the second and third windings may be electrically isolated from the input supply voltage. Advantageously, the transformer provides the aforementioned required electrical isolation for coupling the first switching current via the third winding across an isolation barrier in one direction and for coupling control information via the second winding across the isolation barrier in the opposite direction.

In the Drawing:
FIGURES 1a and 1b illustrate a power supply embodying an aspect of the invention;
FIGURES 2a-2m illustrate waveforms useful for explaining the normal operation of the circuit of FIGURE 1;
FIGURES 3a and 3b illustrate an isolation transformer used in the circuit of FIGURE 1;
FIGURES 4a-4h illustrate waveform useful for explaining a transition from normal to standby operation of the power supply of FIGURE 1;
FIGURES 5a-5h illustrate waveforms useful for explaining a transition from standby to normal operation of the power supply of FIGURE 1;
FIGURE 6 illustrates waveforms of the circuit of FIGURE 1 during an overload condition;
FIGURE 7 illustrates a transient waveform useful for explaining the operation of the circuit of FIGURE 1 during start-up;
FIGURES 8a-8c illustrate waveforms of the circuit of FIGURE 1, that incorporates a modification, under an overload condition; and
FIGURE 9a-9e illustrate waveforms of the circuit of FIGURE 1, that incorporates a modification, during start-up.

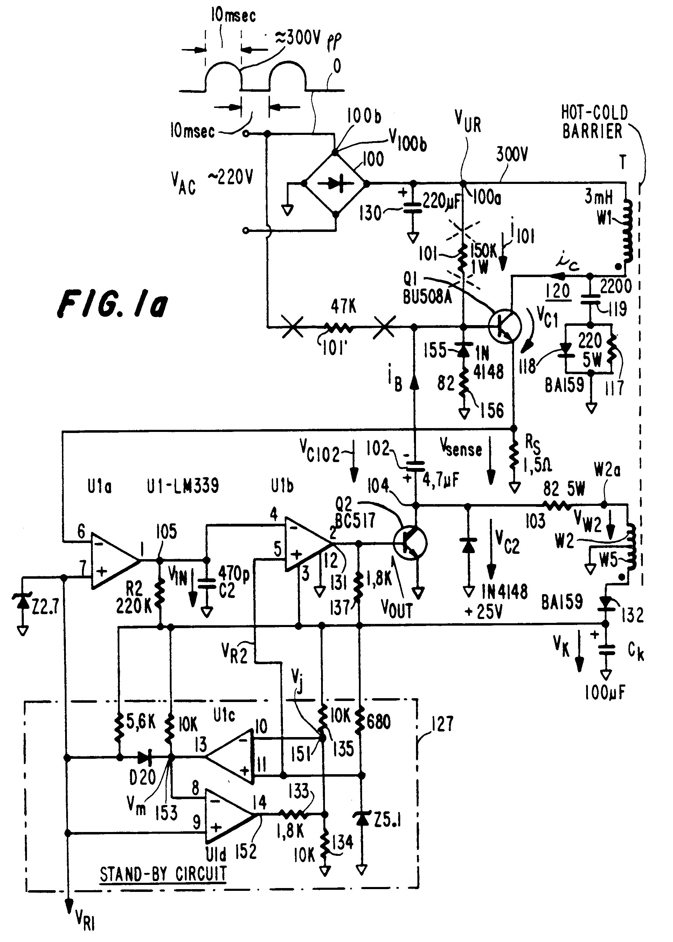

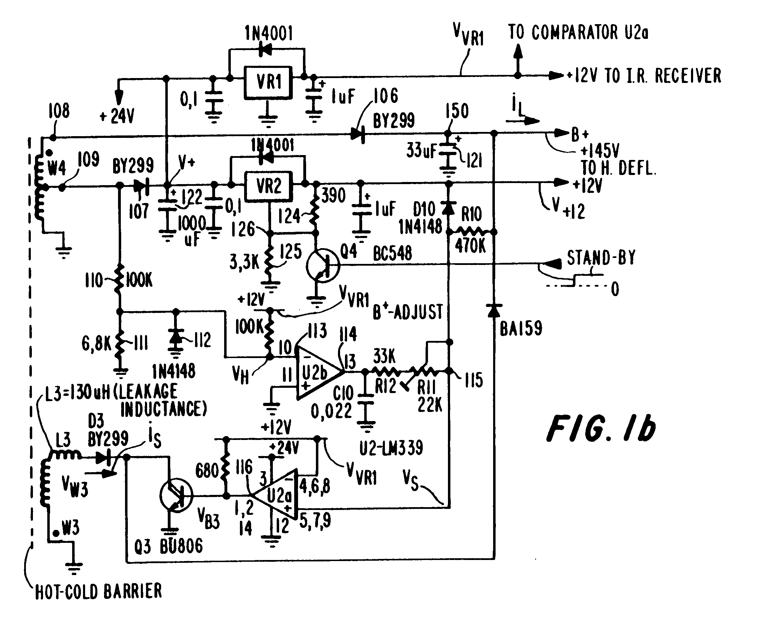

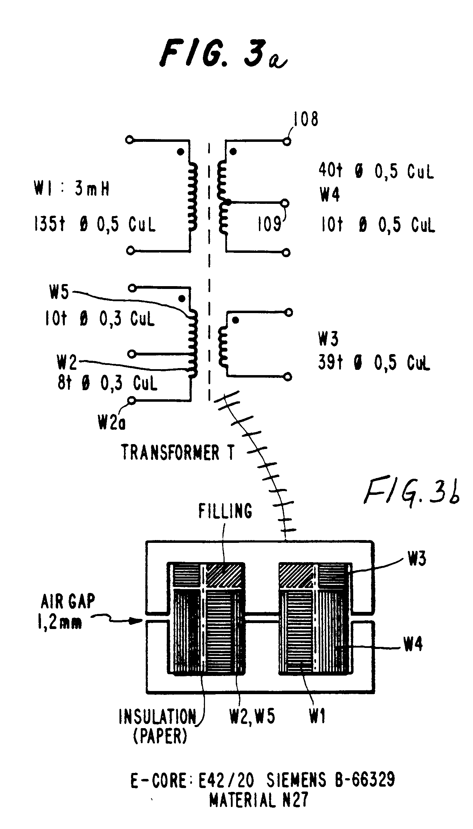

FIGURE 1 illustrates a switched-mode power supply (SMPS), embodying an aspect of the invention. The SMPS produces an output supply voltage B+ at +145 volts that is used for energizing, for example, a deflection circuit of a television receiver, not shown, and an output supply voltage V+ at +24 volts that are both regulated. A mains supply voltage V_{AC} is rectified in a bridge rectifier 100 to produce an unregulated voltage V_{UR}. A primary winding W1 of a flyback transformer T is coupled between a terminal 100a, where voltage V_{UR} is developed, and a collector electrode of a power switching transistor Q1. Transformer T is constructed in the manner shown in FIGURES 3a and 3b. Similar symbols and numerals in FIGURES 1 and 3a and 3b indicate similar items or functions.

The emitter of transistor Q1 of FIGURE 1 is coupled to a common conductor, referred to herein as "hot" ground, via an emitter current sampling resistor Rₛ for developing a voltage Vₛₑₙₛₑ across resistor Rₛ that is proportional to a collector current i_{c} of transistor Q1. The base of transistor Q1 is coupled via a coupling capacitor 102 to a terminal 104 where a switching signal V_{c2} is produced. Signal V_{c2} produces a switching operation in transistor Q1. Terminal 104 is coupled via a resistor 103 to a terminal W2a of a secondary winding W2 of transformer T.

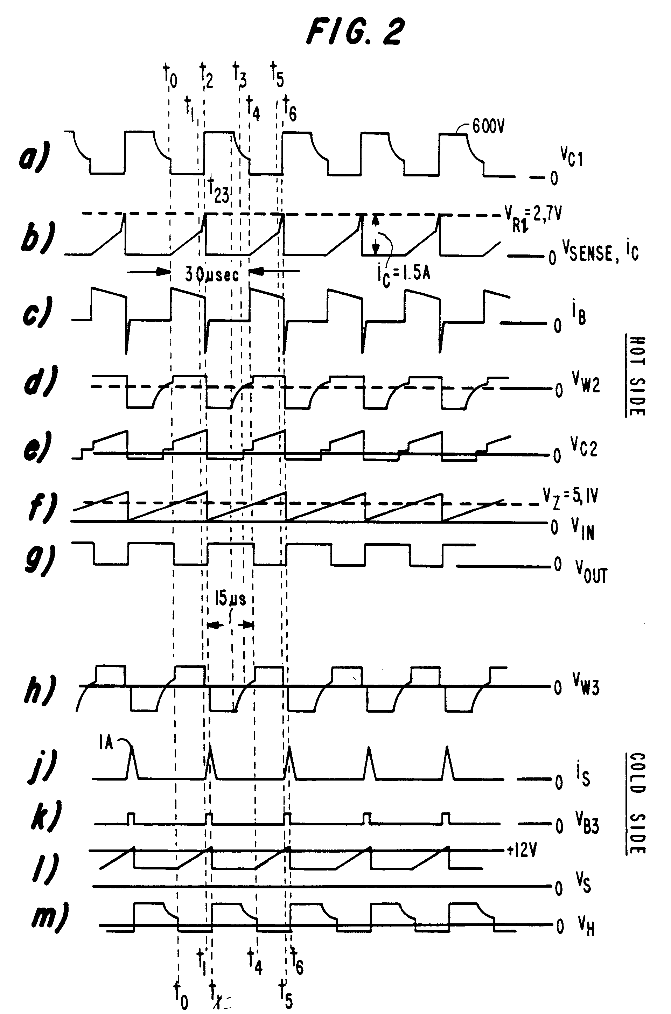

FIGURES 2a-2m illustrate waveforms useful for explaining the normal steady state operation of the SMPS of FIGURE 1. Similar symbols and numerals in FIGURES 1a and 1b, and 2a-2m indicate similar items or functions.

During, for example, interval t₀-t₂ of FIGURE 2a of a corresponding cycle, a voltage V_{W2} of FIGURE 2d developed in winding W2 of FIGURE 1 is positive relative to the hot ground and produces a current i_{B} in the direction of the arrow that flows in the base of transistor Q1. Current i_{B} develops a voltage V_{c102} in capacitor 102 in the polarity shown. Current i_{B} of FIGURE 2c provides the base current that maintains transistor Q1 of FIGURE 1 conductive during interval t₀-t₂ of FIGURE 2a. Consequently, collector current i_{c} of FIGURE 1 is upramping, as shown in FIGURE 2b during interval t₀-t₂, that causes an inductive energy to be stored in transformer T of FIGURE 1. As described later on, at time t₂ of FIGURE 2a, transistor Q1 of FIGURE 1 becomes nonconductive.

After transistor Q1 becomes nonconductive, the inductive energy stored in winding W1 is transferred by a transformer, or flyback action to a secondary winding W4 of transformer T. Corresponding flyback pulses developed in corresponding terminals 108 and 109 of winding W4 are rectified by diodes 106 and 107, respectively, and filtered in capacitors 121 and 122, respectively, for producing DC voltages B+ and V+, respectively, that are referenced to a second common conductor, referred to herein as "cold" ground. The cold ground is conductively isolated from the hot ground.

Terminal 109 is coupled through a voltage divider formed by resistors 110 and 111 to an inverting input terminal 113 of a comparator U2b. When transistor Q1 of FIGURE 1a is conductive, the voltage at terminal 109 produced by the transformer action is negative, causing a protection diode 112 that is coupled to terminal 113 to conduct and to clamp a signal V_{H} developed at terminal 113 to the forward voltage of diode 112, which is a negative value, during interval t₀-t₂ of FIGURE 2m.

Three resistors, R10, R11 and R12 of FIGURE 1b, that are coupled in series between a terminal 150 where voltage B+ is developed and an output terminal 114 of comparator U2b, cause a capacitor C10, coupled between terminal 114 and the cold ground, to charge. Consequently, when signal V_{H} is negative, an upramping portion of a sawtooth signal Vₛ is produced at a terminal 115 between resistors R10 and R11 and has a waveform that is shown in FIGURE 21, during interval t₀-t₂, for example. Prior to interval t₀-t₂, capacitor C10 of FIGURE 1b is completely discharged, resulting in a flat portion of signal Vₛ of FIGURE 21 at a level that is smaller than +12V. The level of the flat portion is determined by the ratio between the sum of the values of resistors R11 and R12 and the value of resistor R10.

Sawtooth signal Vₛ is coupled to a noninverting input terminal of a comparator U2a. A level of +12 volts is coupled to an inverting input terminal of comparator U2a. An output terminal 116 of comparator U2a, where a pulse signal V_{B3} of FIGURE 2k is developed, is coupled to a base electrode of a switching transistor Q3. The collector of transistor Q3 is coupled via a protection diode D3 and a current limiting inductor L3 to a secondary winding W3 of transformer T. Transistor Q3 becomes conductive at an instant that occurs during a portion of the conduction interval of transistor Q1 after sawtooth signal Vₛ becomes larger than the +12 volt level, such as, for example, during interval t₁-t₂ of FIGURE 2k.

When conductive, transistor Q3 forms, with diode D3 and inductor L3, a series arrangement that is coupled across winding W3 and that operates substantially as a low impedance across winding W3. Inductor L3 limits the peak amplitude of a short circuit current iₛ of FIGURE 2j. The resulting low impedance is reflected by the transformer action as a low impedance across winding W1 of FIGURE 1. The result is that collector current i_{c} of transistor Q1 increases during interval t₁-t₂ of FIGURE 2b at a substantially faster rate than during interval t₀-t₁. Consequently, voltage Vₛₑₙₛₑ of FIGURE 1a that is proportional to current i_{c} becomes equal, shortly after time t₁ of FIGURE 2b, to a reference voltage V_{R1} of FIGURE 1 developed across a zener diode Z2.7.

Voltages Vₛₑₙₛₑ and V_{R1} are coupled to and compared in a comparator U1a having an output transistor switch, not shown, that is coupled through an output terminal 105 across a capacitor C2. When, at time t₂ of FIGURE 2b, voltage Vₛₑₙₛₑ becomes equal to voltage V_{R1}, capacitor C2 of FIGURE 1a is immediately discharged and a sawtooth signal Vᵢₙ, developed in capacitor C2, becomes zero, as shown in FIGURE 2f. During the remainder of each cycle, such as during interval t₂-t₆, sawtooth signal Vᵢₙ is upramping at a rate determined by a resistor R2 of FIGURE 1a and by capacitor C2. Signal Vᵢₙ is coupled to an inverting input terminal of a comparator U1b. A reference level V_{R2}, developed across a zener diode Z5.1, is coupled to a noninverting input terminal of comparator U1b.

When, at time t₂ of FIGURE 2f, signal Vᵢₙ becomes zero, an output signal Vₒᵤₜ of FIGURE 2g, developed at an output terminal of comparator U1b and coupled to the base of switching transistor Q2 turns on transistor Q2. When, at time t₂ of FIGURE 2e, transistor Q2 of FIGURE 1a is turned-on, transistor Q2, couples terminal 104 of capacitor 102 to the hot ground. The other terminal of capacitor 102 that is coupled to the base of transistor Q1 is at a level that is negative relative to that at terminal 104. Therefore, the base charge in transistor Q1 that maintains transistor Q1 conductive prior to time t₂ of FIGURE 2a is rapidly swept out, causing transistor Q1 of FIGURE 1a to become immediately nonconductive.

Signal Vₒᵤₜ that is controlled by sawtooth signal Vᵢₙ maintains transistor Q2 conductive and transistor Q1 nonconductive during interval t₂-t₄ of FIGURE 2g. Signal Vₒᵤₜ changes state to attain a level of zero volts at time t₄ when upramping signal Vᵢₙ of FIGURE 2f becomes larger than level V_{R2}, thus a one-shot operation is obtained. Transistor Q2 is maintained conductive and transistor Q1 is maintained nonconductive during, for example, interval t₂-t₄ of FIGURE 2a having a length that is the same in each cycle.

During a portion of, for example, interval t₂-t₄, the corresponding positive flyback pulses at terminals 108 and 109 of secondary winding W4 produce current that maintain diodes 106 and 107 conductive and cause filter capacitors 121 and 122, respectively, to charge. The charge stored in capacitor 121, for example, replenishes a charge removed by a load current i_{L} that flows through, for example, terminal 150, and is proportional to the length of interval t₀-t₂ of FIGURE 2a when transistor Q1 of FIGURE 1a was maintained conductive. The length of interval t₀-t₂ of FIGURE 2a is, in turn, controlled by signal V_{B3}. Thus, voltage B+, for example, is regulated by signal V_{B3} that controls the duty cycle of transistor Q1.

A positive voltage at terminal 109 of FIGURE 1b that occurs during the nonconduction interval of transistor Q1 causes signal V_{H} at terminal 113 of comparator U2b to be positive, as shown during interval t₂-t₄ of FIGURE 2m. The result is that capacitor C10 of FIGURE 1b is immediately discharged and sawtooth signal Vₛ is maintained at the constant level that is lower than +12 volts during, for example, interval t₂-t₄ of FIGURE 21, in preparation for the following interval t₄-t₆ of FIGURE 2a when transistor Q1 of FIGURE 1a again becomes conductive.

Diode 106, for example, that is used for producing voltage B+, remains conductive until a time t₂₃ of FIGURE 2a. During interval t₂-t₂₃, transistor Q1 collector voltage V_{c1} is at a constant positive level of +600V that is determined by voltage V_{UR} by voltage B+ of FIGURE 1b and by the turns ratio of transformer T.

During interval t₂₃-t₄ of FIGURE 2a, voltage V_{c1} varies in a resonant manner due to the operation of an arrangement 120 of FIGURE 1 forming a resonant circuit with the inductance of winding W1. Arrangement 120 includes a capacitor 119 of FIGURE 1a that is coupled in series with a parallel arrangement of a damping resistor 117 and a diode 118 to form arrangement 120. Arrangement 120 is coupled between the collector of transistor Q1 and the hot ground. Diode 118 causes the voltage across capacitor 119 to be equal to voltage V_{c1}, during interval t₂-t₂₃ of FIGURE 2a.

During interval t₂₃-t₄, diodes 106 and 107 of FIGURE 1b are nonconductive and collector voltage V_{c1} varies as a result of a resonant ringing current that is produced in winding W1, capacitor 119 and resistor 117. The resonant ringing current causes voltage V_{W2}, that is developed across winding W2 of transformer T and that is negative until time t₃ of FIGURE 2d, to become increasingly more positive after time t₃ in a resonant manner.

At time t₄ of FIGURE 2g, signal Vₒᵤₜ at the base of transistor Q2 of FIGURE 1a becomes zero as a result of the one-shot operation that was described before, causing transistor Q2 to become nonconductive. After becoming nonconductive, transistor Q2 enables the coupling of positive voltage V_{W2} to the base of transistor Q1. Positive voltage V_{W2} that is coupled via resistor 103 and capacitor 102 to the base of transistor Q1 produces current i_{B} that causes transistor Q1 of FIGURE 1 to be turned on. The values of capacitor 119 and damping resistor 117 are selected so as to insure that voltage V_{W2} is sufficiently positive to turn on transistor Q1 at time t₄ of FIGURE 2d when signal Vₒᵤₜ of FIGURE 2g becomes zero. Transistor Q1 of FIGURE 1a remains conductive until time t₆ of FIGURE 2a that is determined by pulse V_{B3} of FIGURE 2k, in the manner described before with respect to interval t₀-t₂.

After time t₄ of FIGURE 2a, that is analogous to time t₀ of the immediately preceding cycle, capacitor C10 of FIGURE 1 is charged in a sawtooth manner, as described before with respect to interval t₀-t₁ of FIGURE 2a. The DC offset voltage of signal Vₛ is proportional to voltage B+ and may be adjustable by adjusting resistor R11. Thus, pulse signal V_{B3} at the base of transistor Q3 of FIGURE 1b having a leading edge that occurs at time t₅, for example, of FIGURE 2k, occurs after interval t₄-t₅ of FIGURE 21 has elapsed. The length of interval t₄-t₅,representing the conduction time of transistor Q1 of FIGURE 1a, is proportional to voltage B+.

An increase in voltage B+, for example, causes the DC offset of signal Vₛ to increase, hence, transistor Q3 turns on earlier in a given cycle. As described before, when transistor Q3 is turned on by the pulse of signal V_{B3}, collector current i_{c} of transistor Q1 increases rapidly, that causes transistor Q2 to turn on, and that, in turn, causes transistor Q1 to turn off shortly afterward. Thus, the length of interval t₀-t₂ or t₄-t₆, occuring when transistor Q1 is conductive, decreases when voltage B+ increases. The result is that a smaller amount of magnetic energy is available for producing the current that charges, for example, filter capacitor 121 of FIGURE 1b across which voltage B+ is developed. On the other hand, a decrease in voltage B+ will cause transistors Q2 and Q3 to turn on, and transitor Q1 to turn off, later in a given cycle. Thus, a change in voltage B+ is counteracted in a negative feedback loop manner by advancing or delaying the instant, in the given cycle, when transistor Q3 is turned on and when transistor Q1 is turned off, as controlled by voltage B+. The gain of such negative feedback loop is determined by the value of capacitor C10 and may be raised or lowered by selecting the value of capacitor C10.

A first portion of the SMPS of FlGURE 1b that includes, for example, winding W4, the respective terminals where voltage B+ and signal V_{B3} are developed and winding W3, is conductively coupled to the cold ground. On the other hand, a second portion of the SMPS that includes, for example, transistor Q1 and winding W1, is conductively coupled to the hot ground. Transformer T provides a hot-cold barrier that conductively isolates the first portion of the SMPS from the second portion.

In accordance with an aspect of the invention, timing signal V_{B3} that is referenced to the cold ground is applied via winding W3 of flyback transformer T to the base electrode of transistor Q1, that is conductively coupled to the hot ground. Thus transformer T maintains the hot ground conductively isolated from the cold ground. Signal V_{B3} controls the turn-off instant of transistor Q1 in accordance with the level of voltage B+, as explained before.

Energy is transfered in transformer T across the hot-cold barrier from the second portion of the SMPS that is conductively coupled to the hot ground, that includes for example, winding W1, to the first portion of the SMPS that is conductively coupled to the cold ground and that includes, for example, winding W4. Such energy transfer occurs in a direction, across the hot-cold barrier, that is opposite to the direction in which signal V_{B3} is coupled across such hot-cold barrier. Thus, transformer T is used for passing supply current in one direction across the hot-cold barrier, that is from winding W1 to winding W4, and for applying timing signal V_{B3} to control the switching timings in transistor Q1, in the opposite direction across the hot-cold barrier. Therefore, advantageously, there is no need for an additional isolation transformer for coupling timing signal V_{B3} across the hot-cold barrier from the first portion of the SMPS that is conductively coupled to the cold ground, where control signal V_{B3} is generated, to the second portion of the SMPS that is conductively coupled to the hot ground, where the control operation is actually performed. Advantageously, timing signal V_{B3} is generated by sensing the level of voltage B+ at terminal 150 where voltage B+ is actually developed.

A series pass regulator VR2 that is energized by voltage V+ produces a +12 volt regulated voltage V+12. Regulated voltage V+12 is produced as a function of a voltage produced at a junction terminal 126 between resistors 124 and 125. Resistor 124 and 125 form a series arrangement that is coupled between voltage V+12 and the cold ground.

A supply voltage V_{K} is produced by rectifying, using a diode 132, a flyback voltage developed in a winding W5. Voltage V_{K} that is referenced to the hot ground, is used for energizing, for example, comparators U1c and U1d of standby control circuit 127. Voltage V_{K}, that is filtered in a capacitor C_{K}, is coupled through a resistive voltage divider comprising resistors 134 and 135, to an inverting input terminal 151 of a comparator U1c for developing at terminal 151 a control voltage Vⱼ. A resistor 133 has a first terminal that is coupled to junction terminal 151, between resistors 135 and 134, and a second terminal that is coupled to an output terminal 152 of a comparator U1d.

Voltage V_{R2} is coupled to the noninverting input terminal of comparator U1c. An output terminal 153 of comparator U1c, where a voltage Vₘ is developed, is coupled to an inverting input terminal of comparator U1d. Reference voltage V_{R1} is coupled to a noninverting input terminal of comparator U1d.

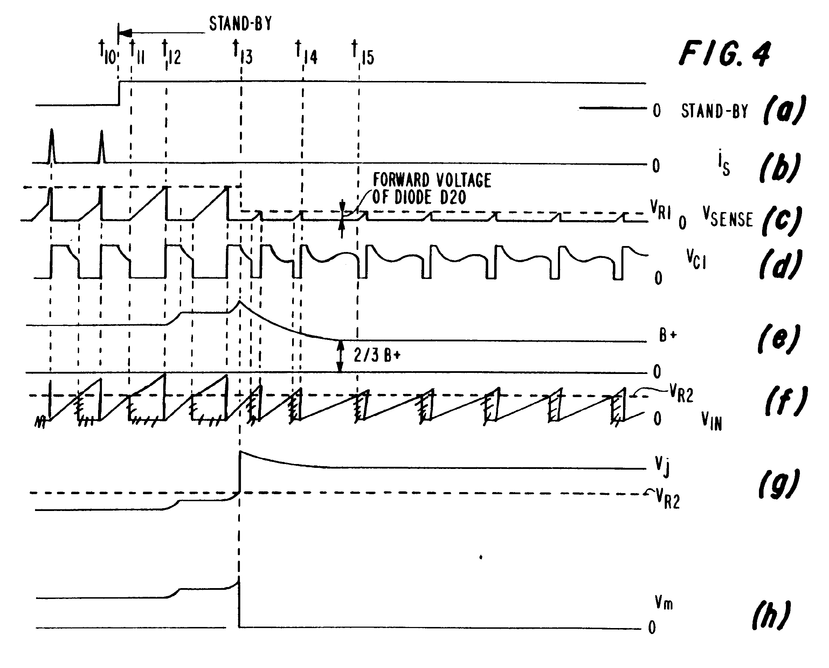

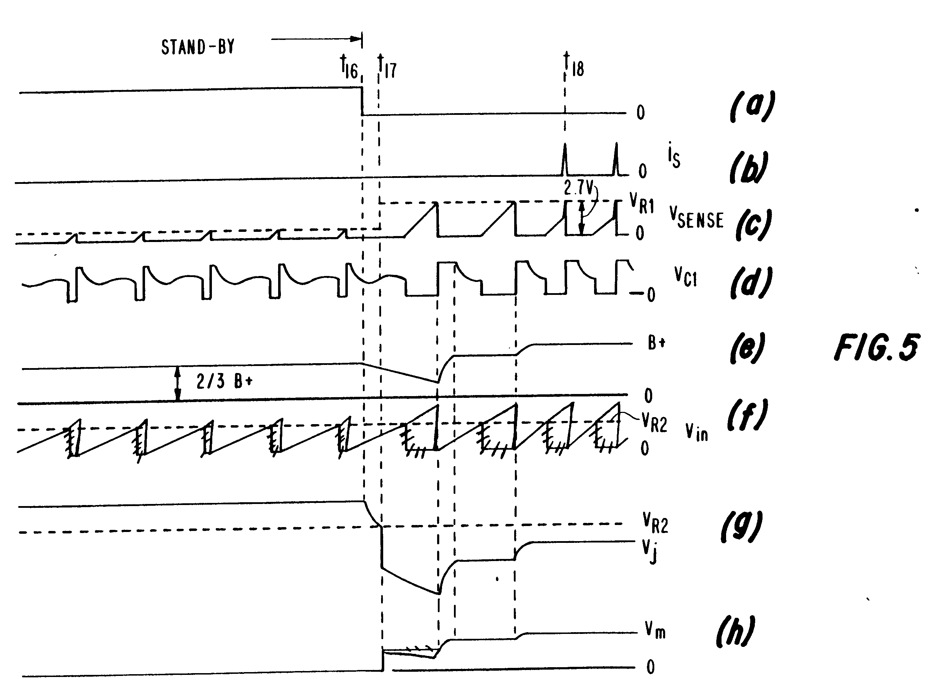

FIGURES 4a-4h illustrate waveforms useful for explaining a transition of the SMPS of FlGURE 1 from normal to standby operation. FIGURES 5a-5h illustrate the corresponding waveforms useful for explaining a transition back to normal operation. Similar figures and numerals in FIGURES 1,2a-2m, 4a-4h and 5a-5h indicate similar items or functions.

During normal operation, comparators U1c and U1d of FIGURE 1a operate as a latch that maintains the voltage at terminal 152 at zero volts, causing voltage Vⱼ to be smaller than voltage V_{R2}. Therefore, comparator U1c generates voltage Vₘ at a level that is higher than voltage V_{R1} for maintaining a diode D20, coupled to the noninverting input terminal of comparator U1a, nonconductive.

Standby operation is initiated when a transistor Q4 of FIGURE 1b, operating as a switch and coupled across resistor 125, becomes conductive, as shown at time t₁₀ of FIGURE 4a. Consequently, voltage V+12 of FIGURE 1 becomes zero. The result is that the horizontal oscillator, not shown, ceases operating immediately and standby operation begins.

The reduction of voltage V+12 to zero volts causes voltage Vₛ, at the noninverting input terminal of comparator U2a, to be clamped to the forward voltage of a diode D10. However, a voltage V_{VR1} at the inverting input terminal of comparator U2a that is produced in a voltage regulator VR1 is maintained equal to approximately +12V, during both normal and standby operations. Therefore, transistor Q3 remains continuously in a nonconductive state; consequently, transistor Q1 forms with transformer T a free-running blocking oscillator that is no longer controlled in a negative feedback loop manner. Therefore, the duty cycle of transistor Q1 initially increases after transistor Q4 becomes conductive. The load at terminal 150 draws substantially less current during standby. Therefore, voltages V_{K}, B+ and Vⱼ initially increase after the transition to the conductive state in transistor Q4, as shown in FIGURES 4e and 4g during interval t₁₂-t₁₃.

At time t₁₃ of FIGURE 4g, voltage Vⱼ becomes equal to voltage V_{R2}, causing comparator U1c of FIGURE 1 to produce output voltage Vₘ at zero volts, as shown in FIGURE 4h. Clamping diode D20 of FIGURE 1, that, during normal operation, is back biased by voltage Vₘ, becomes conductive at time t₁₃ of FIGURE 4h. After time t₁₃ of FIGURE 4h, an anode of diode D20 of FIGURE 1a, that is coupled to the noninverting input terminal of comparator U1a, clamps voltage V_{R1} at the noninverting input terminal of comparator U1d, to the forward voltage of diode D20. Thus voltage V_{R1}, during standby, is substantially lower than during normal operation. Consequently, transistor Q1 will be turned-off, during each cycle, when a peak level of collector current i_{c} is substantially lower than during normal operation, as shown by the waveform of voltage Vₛₑₙₛₑ of FIGURE 4c. Hence, the stored energy in winding W1 of FIGURE 1 is substantially reduced during the conduction time of transistor Q1. The result is that, during standby, voltages B+ and V_{K} will ultimately decrease relative to their respective values during normal operation.

The decrease in voltage V_{K} will cause the rate of change of upramping signal Vᵢₙ of FIGURE 2f to decrease as well. Therefore, the ratio of conduction time to nonconduction time, or duty cycle, of transistor Q1 will further decrease. The result is that voltages B+ and V_{K} will even further decrease relative to their values during normal operation. In a typical loading condition, voltage B+ drops, during standby, to about, for example, 2/3 of its normal operation level.

A low level voltage B+ is desirable during start-up for reducing the stress on the horizontal deflection switch, not shown, during a transition from standby to normal operation, to avoid the risk of a secondary breakdown in the deflection transistor. In contrast, in some prior art SMPS that utilize, for example, an integrated circuit TDA4600, voltage B+ may increase from a normal operation level of +145V to a standby level of +190V.

After time t₁₃ of FIGURE 4h, comparator U1d of FIGURE 1a, having input terminals that are coupled across conductive diode D20, decouples resistor 133 from the resistive voltage divider. Therefore, voltage Vⱼ of FIGURE 4g becomes immediately higher than voltage V_{R2}. The result is that comparator U1c of FIGURE 1 maintains voltage Vₘ of FIGURE 4h at zero volts throughout standby. Consequently, comparators U1c and U1d of FIGURE 1a will remain latched to their respective states throughout standby operation even though, as described before, voltage V_{K}, ultimately becomes smaller, during standby, than during normal operation.

Immediately after normal operation is initiated by the operation of transistor Q4, as shown at time t₁₆ of FIGURE 5a, voltages B+ of FIGURE 5e and voltage Vⱼ of FIGURE 5g decrease in a down ramping manner. The decrease in voltage B+ and Vⱼ occurs due to the sudden loading of, for example, voltage B+ by the horizontal deflection transistor, not shown, that begins switching. When, at time t₁₇ of FIGURE 5g, voltage Vⱼ becomes smaller than voltage V_{R2}, comparators U1c and U1d of standby control circuit 127 of FIGURE 1a reverse their respective states. Consequently, diode D20 of FIGURE 1 becomes again back biased and voltage V_{R1} returns to its normal level of +2.7V. Subsequently, transitor Q3 is turned on at time t₁₈ of FIGURE 5b, causing the resumption of the feedback operation in the SMPS of FIGURE 1.

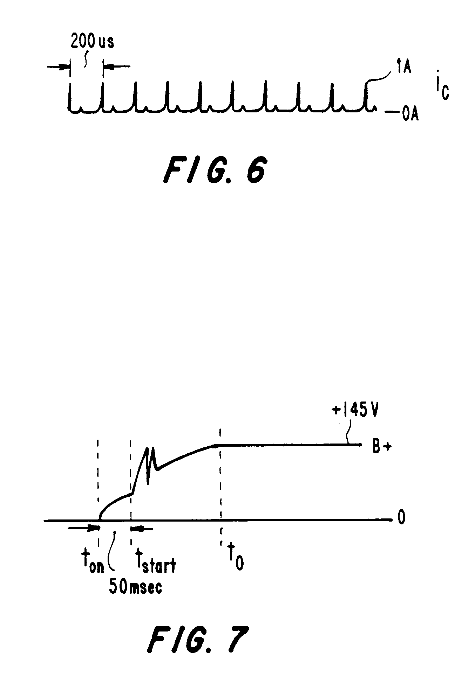

If a fault condition occurs in the deflection circuit, not shown, causing a short circuit or overloading to be formed between, for example, terminal 150, where voltage B+ is developed, and the cold ground, the SMPS begins operating in an intermittent mode. In the intermittent mode, each pulse of current i_{c} is followed by a relatively long dead time interval in which no pulse of current i_{c} occurs, as shown in FIGURE 6. At the end of each current pulse of current i_{c}, the short circuit prevents voltage V_{c1} from substantially exceeding voltage V_{UR}. Therefore, no ringing current will be produced in transformer T. Consequently, voltage V_{W2} will not become positive, as in normal operation. Therefore, voltage V_{W2} cannot initiate the conduction of transitor Q1.

In the beginning of a given dead time interval, transistor Q1 is maintained in cutoff by the negative voltage developed in capacitor 102. During the dead time interval, capacitor 102 is discharged slowly via a resistor 156, a diode 155, resistor 103 and winding W2, and produces current i_{B} in a direction that is opposite to that shown by the arrow.

A resistor 101 is coupled between terminal 100a where voltage V_{UR} is developed, and the base of transistor Q1. When, as a result of the discharge of capacitor 102, current i_{B}, now flowing in the opposite direction to that of the arrow, becomes smaller than a current i₁₀₁ in resistor 101, transistor Q1 is turned on and the regenerative feedback loop produces a pulse of current i_{c}. Thus, current i₁₀₁ in resistor 101 causes the dead time interval to end.

At some point during the pulse of current i_{c} that occurs in the short circuit, overloaded operation, current i_{B} produced by voltage V_{W2} becomes, during the conduction time of transistor Q1, insufficient for maintaining transistor Q1 in saturation. Therefore, the voltage at the collector transistor Q1 begins increasing and voltage V_{W2} becomes less positive, causing current i_{B} to decrease in the regenerative feedback loop manner. When current i_{B} becomes zero, transistor Q1 turns off and the next dead time interval begins. Such intermittent operation is desirable when overloading occurs because it reduces the stress on transistor Q1 by protecting transistor Q1 from overheating.

As explained before, during start-up operation, the SMPS of FIGURE 1 is initially overloaded by the deflection circuit, not shown. Therefore, the SMPS operates in the intermittent mode, that was explained before, as shown by the transient waveform of voltage B+ in FIGURE 7 during interval tₒₙ-tₛₜₐᵣₜ. Advantageously, the intermittent mode provides a soft start operation. At time tₛₜₐᵣₜ, transistor Q1 of FIGURE 1 receives a proper base drive through winding W2 for operating the regenerative feedback loop. The result is that the intermittent mode operation ceases. At time t₀ of FIGURE 7, the negative feedback loop is stabilized and operates in steady state and the soft start turn-on operation terminates.

In the embodiment of the invention discussed above, resistor 101 of FIGURE 1a provides start-up base current for turning on transistor Q1. In a second modified embodiment of the invention, shown in FIGURE 1a, a resistor 101′ is coupled between a terminal 100b of bridge rectifier 100, where a half-wave rectified voltage V_{100b} is produced, and between the base of transistor Q1. Resistor 101′ is used instead of resistor 101 that is removed from the SMPS of FIGURE 1a.

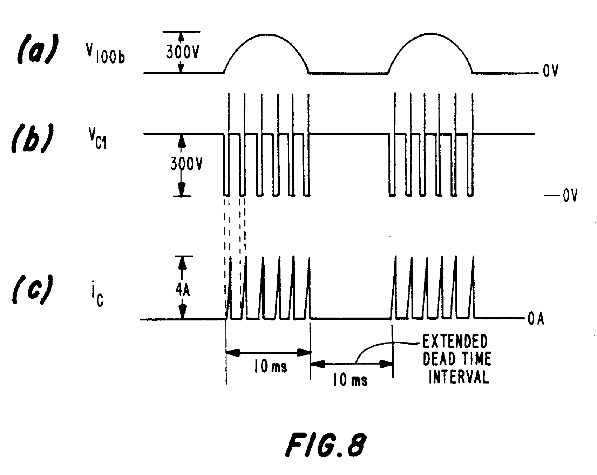

During an overloading condition or during start-up, in the case when resistor 101′ is used instead of resistor 101, substantially no current flows in resistor 101′ during alternate half cycles of voltage V_{AC}. Each such half cycle has a length of 10 milliseconds (when the mains frequency is 50 Hz) that occurs when half wave rectified voltage V_{100b} at terminal 100b is zero. Therefore, the dead time interval that was mentioned before extends throughout each alternately occuring 10 millisecond interval, as shown by the waveforms of voltage V_{100b}, voltage V_{c1} and current i_{c} in FIGURES 8a, 8b and 8c, respectively. The 10 millisecond extended dead time intervals of , for example, FIGURE 8c enable cooling down of transistor Q1 of FIGURE 1a that, advantageously protects and reduces the stress on transistor Q1. The 10 millisecond dead time intervals may increase the length of an interval during which soft start operation occurs. (If 60 Hz mains are used, the dead time interval would be 8 milliseconds.)

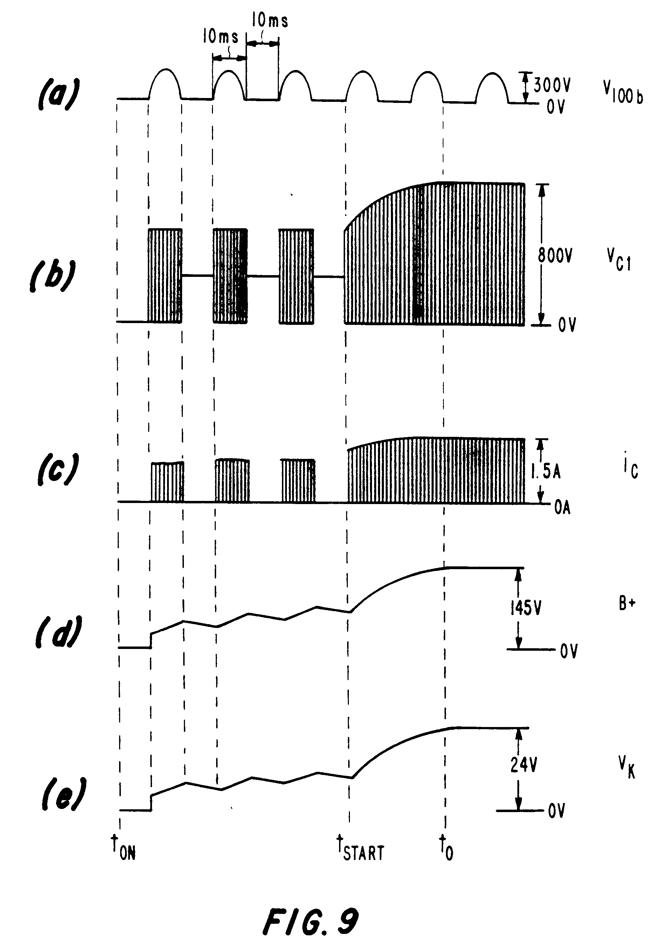

FIGURES 9a-9e illustrate waveforms useful for explaining the soft start operation of the SMPS of FIGURE 1a when resistor 101′ is used instead of resistor 101. Similar symbols and numerals in FIGURES 1a, 2a-2m, 7, 8 and 9a-9e indicate similar items or functions. At time tₛₜₐᵣₜ of FIGURE 9c, current i_{c} is sufficiently large for causing the one-shot arrangement to trigger that causes transistor Q1 of FIGURE 1a to turn off during a portion of each cycle. The energy stored in transformer T during the conduction interval of transistor Q1 produces current i_{B} that turns on transistor Q1 at the end of each nonconduction interval of transistor Q1.

## Claims

1. Switched mode power supply, comprising: a source (100) of an input supply voltage (VUR); a transformer (T) having first (W1) and second (W3) windings; a controllable switch (Q1) having a main current conducting terminal coupled to said first winding (W1) and to said source (100) of said input supply voltage (VUR), said controllable switch being switched by a periodic first control signal (iB) for generating a first switching current (ic) in said first winding that stores magnetic energy in said transformer; means (W4, 106) coupled to said transformer (T) and responsive to said first switching current for producing from said stored energy an output supply voltage (B+) that is coupled to a load; a current sampling first impedance (RS) coupled in a current path that includes said first winding (W1) for conducting at least a portion of said first switching current (ic) in said first impedance (RS) to develop in said first impedance a current sampling signal (Vsense) that is indicative of a level of said first switching current (ic) when said controllable switch (Q1) is conductive; means (Ula,Ulb,Q2) responsive to said current sampling signal (Vsense) for generating said first control signal (iB) to switch said controllable switch (Q1) into nonconduction when said first switching current exceeds a predetermined level; **characterized by** means (Q3) for applying a low impedance to said second winding (W3) after a first conduction interval of said controllable switch (Q1) has elapsed, to cause said first switching current to exceed said predetermined level; and means (U2a) for varying said first conduction interval in accordance with said output supply voltage (B+) such that a duty cycle of said controllable switch (Q1) varies in a negative feedback manner for regulating said output supply voltage (B+).

2. Power supply according to claim 1, **characterized in that** said controllable switch comprises a first switching transistor (Q1) and wherein a third winding (W2) of said transformer (T) is coupled to said control terminal of said transistor (Q1) to form a regenerative feedback loop that operates as a blocking oscillator.

3. Power supply according to claim 2, **characterized in that** said third winding (W2) is coupled to said control terminal of said transistor (Q1) via a capacitor (102) for developing in said capacitor a voltage that is coupled to said control terminal of said transistor (Q1) for speeding up a turn-off transition in said transistor.

4. Power supply according to claim 3, **characterized by** means (U2a,U2b) for generating a pulse in each period of said first control signal, and a second switching transistor (Q3) having a control terminal where said pulse is developed for decoupling said third winding (W2) from said control terminal of said first switching transistor (Q1) during said pulse such that said voltage that is developed in said capacitor (102) causes said first switching transistor (Q1) to turn off in preparation for the followlng period of conduction of said first switching transistor (Q1).

5. Power supply according to claim 1, **characterized by** a third winding (W2) of said transformer (T) coupled via a capacitance (102) to said control terminal of said controllable switch (Q1) to form regenerative loop that operates during normal operation as a blocking oscillator.

6. Power supply according to claim 1, **characterized in that** said controllable switch comprises a first switching transistor (Q1) and wherein said low impedance applying means comprises means responsive to a signal that is developed in said transformer (T) and to a signal that is representative of said output supply voltage (B+) for generating a second control signal that is coupled to a control terminal of a second switching transistor (Q3), said second switching transistor applying said low impedance across said second winding (W3) of said transformer (T) at a controllable instant within a given period of said first control signal (iB) that varies in accordance with a level of said output supply voltage (B+), said low impedance (L3) producing an increase in a rate of change of said first switching current (ic) in said first winding (W1) that is substantially higher than prior to said controllable instant.

7. Power supply according to claim 6, **characterized in that** said first control signal generating means comprises a first comparator (U1a) responsive to said first switching current (ic) and to a first reference level (Z2.7) for generating a pulse of said first control signal when said first switching current becomes larger than a value determined by said reference level, such that a peak level of said first switching current (ic) is determined in accordance with said reference level (Z2.7)

8. Power supply according to claim 7, **characterized by** a source (Q4) of an on/off control signal that is coupled to said load and that causes a reduction in an output current flowing in said load during a standby mode of operation such that the reduction in said output current initially causes said output supply voltage (B+) to increase after a transition of said on/off control signal from a power-on state to a power-off state thereof occurs, and a second comparator (U1c) responsive to a voltage (Vj) that is representative of said output supply voltage and to a second reference level for producing, after said transition occurs, a second control signal when said output supply voltage becomes larger than a level determined in accordance with said second reference level, said second control signal being coupled to said first comparator (U1a) for varying said first reference level (Z2.7) that causes said peak level of said first switching current (ic) to become substantially smaller than during normal operation.

9. Power supply according claim 1 **characterized in that** said first impedance comprises a current sampling resistance (RS) that is coupled in series with said controllable switch (Q1) and wherein said first control signal generating means comprises a comparator (U1a) responsive to a signal that is developed in said current sampling resistor (RS) and to a reference level (Z2.7) for generating a trigger signal, and a one-shot arrangement responsive to said trigger signal for generating a pulse of said first control signal (iB) when said signal that is developed in said current sampling resistance (RS) becomes equal to said reference level (Z2.7), said pulse being coupled to said control terminal of said controllable switch (Q1) for turning off said controllable switch (Q1) throughout the duration of said pulse such that outside the duration of said pulse said controllable switch (Q1) is conductive.

## Patentansprüche

1. Schaltnetzteil, umfassend: eine Quelle (100) einer Eingangsversorgungsspannung (VUR); einen Transformator (T) mit einer ersten (W1) und einer zweiten (W3) Wicklung; einen steuerbaren Schalter (Q1), dessen den Hauptstrom leitender Anschluß mit der ersten Wicklung (W1) und der Quelle (100) der Eingangsversorgungsspannung (VUR) verbunden ist, wobei der steuerbare Schalter durch ein erstes periodisches Steuersignal (iB) geschaltet wird, um einen ersten Schaltstrom (ic) in der ersten Wicklung zu erzeugen, der magnetische Energie im Transformator speichert; Mittel (W4, 106), die an den Transformator angeschlossen sind und auf den ersten Schaltstrom reagieren, um aus der gespeicherten Energie eine Ausgangsversorgungsspannung (B+) zu erzeugen, die mit einer Last verbunden ist; eine erste Stromabtastimpedanz (RS), die in einen Stromweg geschaltet ist, der die erste Wicklung (W1) enthält, um mindestens einen Teil des ersten Schaltstromes (ic) in die erste Impedanz (RS) zu leiten, um in der ersten Impedanz ein Stromabtastsignal (Vsense) zu erzeugen, das die Stärke des ersten Schaltstromes (ic) anzeigt, wenn der steuerbare Schalter (Q1) leitet; Mittel (U1a, U1b, Q2), die auf das erste Abtastsignal (Vsense) reagieren, um das erste Steuersignal (iB) zu erzeugen, das den steuerbaren Schalter (Q1) auf Sperrung schaltet, wenn der erste Schaltstrom eine vorbestimmte Stärke überschreitet, **gekennzeichnet durch** Mittel (Q3) zum Anlegen einer niedrigen Impedanz an die zweite Wicklung (W3), nachdem ein erstes Leitungsintervall des steuerbaren Schalters (Q1) vergangen ist, um den ersten Schaltstrom zu veranlassen, die vorbestimmte Stärke zu überschreiten, und Mittel (U2a) zur Änderung des ersten Leitungsintervalls in Übereinstimmung mit der Ausgangsversorgungsspannung (B+), so daß sich das Tastverhältnis des steuerbaren Schalters (Q1) nach Art einer Gegenkopplung ändert, um die Ausgangsversorgungsspannung (B+) zu regeln.

2. Netzteil nach Patentanspruch 1, **dadurch gekennzeichnet, daß** der steuerbare Schalter einen ersten Schalttransistor (Q1) umfaßt und in dem eine dritte Wicklung (W2) des Transformators (T) mit dem Steueranschluß des Transistors (Q1) verbunden ist, um eine Mitkopplungsschleife zu bilden, die als Sperrschwinger arbeitet.

3. Netzteil nach Patentanspruch 2, **dadurch gekennzeichnet, daß** die dritte Wicklung (W2) über einen Kondensator (102) mit dem Steueranschluß des Transistors (Q1) verbunden ist, um im Kondensator eine Spannung zu bilden, die an den Steueranschluß des Transistors (Q1) angelegt wird, um einen Ausschaltübergang im Transistor zu beschleunigen.

4. Netzteil nach Patentanspruch 3, **gekennzeichnet durch** Mittel (U2a, U2b) zur Erzeugung eines Impulses in jeder Periode des ersten Steuersignals und einen zweiten Schalttransistor (Q3), an dessen Steueranschluß der Impuls entwickelt wird, um die dritte Wicklung (W2) vom Steueranschluß des ersten Schalttransistors (Q1) während des Impulses zu trennen, so daß die im Kondensator (102) entstehende Spannung den ersten Schalttransistor (Q1) in Vorbereitung der folgenden Leitungsperiode des ersten Schalttransistors (Q1) zum Abschalten veranlaßt.

5. Netzteil nach Patentanspruch 1, **gekennzeichnet durch** eine dritte Wicklung (W2) des Transformators (T), die über einen Kondensator (102) mit dem Steueranschluß des steuerbaren Schalters (Q1) verbunden ist, um eine Mitkopplungsschleife zu bilden, die im Normalbetrieb als Sperrschwinger arbeitet.

6. Netzteil nach Patentanspruch 1, **dadurch gekennzeichnet, daß** der steuerbare Schalter einen ersten Schalttransistor (Q1) umfaßt und in dem die Mittel zum Anlegen einer niedrigen Impedanz Mittel umfassen; die auf ein Signal ansprechen, das im Transformator (T) entsteht, und auf ein Signal, das die Ausgangsversorgungsspannung (B+) abbildet, um ein zweites Steuersignal zu erzeugen, das am Steueranschluß eines zweiten Schalttransistors (Q3) anliegt, wobei der zweite Schalttransistor die niedrige Impedanz über die zweite Wicklung (W3) des Transformators (T) zu einem steuerbaren Zeitpunkt in einer gegebenen Periode des ersten Steuersignals (iB) anlegt, der sich in Übereinstimmung mit dem Betrag der Ausgangsversorgungsspannung (B+) ändert, wobei die niedrige Impedanz (L3) einen Anstieg in der Änderungsrate des ersten Schaltstromes (ic) in der ersten Wicklung (W1) verursacht, die wesentlich höher ist, als vor dem steuerbaren Zeitpunkt.

7. Netzteil nach Patentanspruch 6, **dadurch gekennzeichnet, daß** die Mittel zur Erzeugung des ersten Steuersignals einen ersten Vergleicher (U1a) umfassen, der auf den ersten Schaltstrom (ic) reagiert und auf einen ersten Bezugspegel (Z2.7), um einen Impuls des ersten Steuersignals zu erzeugen, wenn der erste Schaltstrom größer wird, als ein durch den Bezugspegel bestimmter Wert, so daß ein Spitzenwert des ersten Schaltstromes (ic) in Übereinstimmung mit dem Bezugspegel (Z2.7) bestimmt wird.

8. Netzteil nach Patentanspruch 7, gekennzeichnet durch eine Quelle (Q4) eines Ein-/Aus-Steuersignales, das mit der Last verbunden ist und eine Verringerung eines Ausgangsstromes, der durch diese Last fließt, während eines Bereitschaftsbetriebs verursacht, so daß die Verringerung des Ausgangsstromes zunächst nach einem Übergang des genannten Ein-/Aus-Steuersignales von einem Ein- zu einem Aus-Zustand die Ausgangsversorgungsspannung (B+) ansteigen läßt, und einen zweiten Vergleicher (U1c), der auf eine Spannung (Vⱼ) reagiert, die die genannte Ausgangsversorgungsspannung abbildet, und auf einen zweiten Bezugspegel, um nach Eintreten des Überganges ein zweites Steuersignal zu erzeugen, wenn die Ausgangsversorgungsspannung größer wird, als ein in Übereinstimmung mit dem zweiten Bezugspegel festgelegter Wert, wobei dieses zweite Steuersignal an den ersten Vergleicher (U1a) angelegt ist, um den ersten Bezugspegel (Z2.7) zu ändern, was den Spitzenwert des ersten Schaltstromes (ic) dazu veranlaßt, wesentlich kleiner zu werden, als im Normalbetrieb.

9. Netzteil nach Patentanspruch 1, dadurch gekennzeichnet, daß die erste Impedanz einen Stromabtastwiderstand (RS) umfaßt, der mit dem steuerbaren Schalter (Q1) in Reihe geschaltet ist und in dem die Mittel zur Erzeugung des ersten Steuersignales einen Vergleicher (U1a) umfassen, der auf ein Signal reagiert, das im Stromabtastwiderstand (RS) entsteht, und auf einen Bezugspegel (Z2.7), um ein Triggersignal zu erzeugen, und eine Einzelschrittschaltung, die auf das Triggersignal reagiert, um einen Impuls des ersten Steuersignales (iB) zu erzeugen, wenn das Signal, das im Stromabtastwiderstand (RS) entsteht, zum Bezugspegel (Z2.7) gleich wird, wobei der Impuls an den Steueranschluß des steuerbaren Schalters (Q1) angelegt wird, um den steuerbaren Schalter (Q1) für die Dauer dieses Impulses auszuschalten, so daß der steuerbare Schalter (Q1) außerhalb der Dauer des Impulses leitet.

## Revendications

1. Bloc d'alimentation à découpage comprenant : une source (100) de tension d'alimentation à l'entrée (VUR) ; un transformateur (T) ayant un premier (W1) et un second (W3) enroulement ; un commutateur qui peut être commandé (Q1) ayant une borne conductrice de courant principal couplée au premier enroulement (W1) et à la source (100) de la tension d'alimentation à l'entrée (VUR), le commutateur qui peut être commandé étant commuté par un premier signal de commande périodique (iB) pour générer un premier courant de commutation (ic) dans le premier enroulement qui emmagasine l'énergie magnétique dans le transformateur ; des moyens (W4, 106) couplés au transformateur (T) et sensibles au premier courant de commutation pour produire, à partir de l'énergie emmagasinée, une tension d'alimentation à la sortie (B+) qui est couplée à une charge ; une première impédance d'échantillonnage de courant (RS) couplée dans un trajet de courant qui comprend le premier enroulement (W1) pour conduire au moins une portion du premier courant de commutation (ic) dans la première impédance (RS) pour former dans la première impédance un signal d'échantillonnage de courant (Vsense) qui indique un niveau du premier courant de commutation (ic) lorsque le commutateur qui peut être commandé (Q1) est conducteur ; des moyens (U1a, U1b, Q2) sensibles au signal d'échantillonnage de courant (Vsense) pour générer le premier signal de commande (iB) pour commuter le commutateur qui peut être commandé (Q1) en non conduction lorsque le premier courant de commutation dépasse un niveau prédéfini, **caractérisé par** un organe (Q3) pour appliquer une basse impédance au second enroulement (W3) après qu'un premier intervalle de conduction du commutateur qui peut être commandé (Q1) se soit écoulé pour faire en sorte que le commandé (Q1) se soit écoulé pour faire en sorte que le premier courant de commutation dépasse le niveau prédéfini ; et un organe (U2a) pour varier le premier intervalle de conduction en accord avec la tension d'alimentation à la sortie (B+) de telle manière qu'un rapport cyclique du commutateur qui peut être commandé (Q1) varie à la manière d'une contre-réaction pour régler la tension d'alimentation à la sortie (B+).

2. Bloc d'alimentation selon la revendication 1, **caractérisé en ce** que le commutateur qui peut être commandé comprend un premier transistor de commutation (Q1) et dans lequel un troisième enroulement (W2) du transformateur (T) est couplé à la borne de commande du transistor (Q1) pour former une boucle de rétroaction positive qui fonctionne comme un oscillateur bloqué.

3. Bloc d'alimentation selon la revendication 2, **caractérisé en ce** que le troisième enroulement (W2) est couplé à la borne de commande du transistor (Q1) par l'intermédiaire d'un condensateur (102) pour former dans le condensateur une tension qui est couplée à la borne de commande du transistor (Q1) pour accélérer une transition de blocage dans le transistor.

4. Bloc d'alimentation selon la revendication 3, **caractérisé par** des moyens (U2a, U2b) pour générer une impulsion dans chaque période du premier signal de commande, et un second transistor de commutation (Q3) ayant une borne de commande où l'impulsion se forme pour découpler le troisième enroulement (W2) de la borne de commande du premier transistor de commutation (Q1) pendant l'impulsion de telle manière que la tension qui est développée dans le condensateur (102) provoque le blocage du premier transistor de commutation (Q1) en préparation de la période suivante de conduction du premier transistor de commutation (Q1).

5. Bloc d'alimentation selon la revendication 1, **caractérisé par** un troisième enroulement (W2) du transformateur (T) couplé par l'intermédiaire d'un condensateur (102) à la borne de commande du commutateur qui peut être commandé (Q1) pour former une boucle à rétroaction positive qui fonctionne pendant le fonctionnement normal comme un oscillateur bloqué.

6. Bloc d'alimentation selon la revendication 1, **caractérisé en ce** que le commutateur qui peut être commandé comprend un premier transistor de commutation (Q1) et dans lequel l'organe qui applique la basse impédance comprend un organe sensible à un signal qui est formé dans le transformateur (T) et à un signal qui est représentatif de la tension d'alimentation à la sortie (B+) pour générer un second signal de commande qui est couplé à une borne de commande d'un second transistor de commutation (Q3), le second transistor de commutation appliquant la basse impédance par le second enroulement (W3) du transformateur (T) à un instant qui peut être commandé à l'intérieur d'une période donnée du premier signal de commande (iB) qui varie en accord avec un niveau de tension d'alimentation à la sortie (B+), la basse impédance (L3) produisant une augmentation du taux de changement du premier courant de commutation (ic) dans le premier enroulement (W1) qui est considérablement plus élevée qu'avant l'instant qui peut être commandé.

7. Bloc d'alimentation selon la revendication 6, **caractérisé en ce** que l'organe qui génère le premier signal de commande comprend un premier comparateur (U1a) sensible au premier courant de commutation (ic) et à un premier niveau de référence (Z2,7) pour générer une impulsion du premier signal de commande lorsque le premier courant de commutation devient supérieur à une valeur définie par le niveau de référence de telle manière qu'un niveau de crête du premier courant de commutation (ic) est défini en accord avec le niveau de référence (Z2,7).

8. Bloc d'alimentation selon la revendication 7, **caractérisé par** une source (Q4) d'un signal de commande marche/arrêt qui est couplé à la charge et qui provoque une réduction du courant de sortie qui passe dans la charge pendant un mode d'attente de telle manière que la réduction du courant de sortie provoque initialement une augmentation de la tension d'alimentation à la sortie (B+) après qu'une transition du signal de commande marche/arrêt d'un état de marche à un état d'arrêt ait eu lieu, et un second comparateur (U1c) sensible à une tension (Vj) qui est représentative de la tension d'alimentation à la sortie et à un second niveau de référence pour produire, après que la transition ait eu lieu, un second signal de commande lorsque la tension d'alimentation à la sortie devient supérieure à un niveau défini en accord avec le second niveau de référence, le second signal de commande étant couplé au premier comparateur (U1a) pour faire varier le premier niveau de référence (Z2,7), ce qui fait que le niveau de crête du premier courant de commutation (ic) devient considérablement plus petit que pendant le fonctionnement normal.

9. Bloc d'alimentation selon la revendication 1, **caractérisé en ce** que la première impédance comprend une résistance d'échantillonnage de courant (RS) qui est couplée en série au commutateur qui peut être commandé (Q1) et dans lequel l'organe qui génère le premier signal de commande comprend un comparateur (U1a) sensible à un signal qui se forme dans la résistance d'échantillonnage de courant (RS) et à un niveau de référence (Z2,7) pour générer un signal de déclenchement, et un arrangement pas à pas sensible au signal de déclenchement pour générer une impulsion du premier signal de commande (iB) lorsque le signal qui se forme dans la résistance d'échantillonnage de courant (RS) devient égale au niveau de référence (Z2,7), l'impulsion étant couplée à la borne de commande du commutateur qui peut être commandé (Q1) pour bloquer le commutateur qui peut être commandé (Q1) pendant toute la durée de l'impulsion de telle manière que le commutateur qui peut être commandé (Q1) est conducteur en dehors de la durée de l'impulsion.
